# EUROPEAN PATENT APPLICATION

(11) **EP 2 869 364 A2**
(43) Date of publication of application: **06.05.2015**
(21) Application number: 14185655.9
(22) Date of filing: 19.09.2014
(51) Int. Cl.: H01M 2/16, H01M 4/134, H01M 4/38, H01M 10/0525, H01M 10/0567

(54) **Rechargeable lithium battery**

(30) Priority: 04.11.2013 KR 20130133111
(71) Applicant: Samsung SDI Co., Ltd., Yongin-si, Gyeonggi-do (KR)
(72) Inventor: Bae, Tae-Hyun, Gyeonggi-do (KR); Shin, Woo-Cheol, Gyeonggi-do (KR); Eom, Sang-Hyun, Gyeonggi-do (KR); Kim, Myung-Hoon, Gyeonggi-do (KR); Lee, Seung-Tae, Gyeonggi-do (KR); Kim, Ae-Ran, Gyeonggi-do (KR); Choi, Dong-Myung, Gyeonggi-do (KR)
(74) Representative: Russell, Tim

(57) **Abstract**

The invention relates to a rechargeable lithium battery comprising a negative electrode including a negative active material, a positive electrode, a separator between the negative electrode and the positive electrode and an electrolyte solution including an additive, wherein the negative active material comprises a Si-based material, and the additive includes fluoroethylene carbonate and a compound represented by the following Chemical Formula 1.

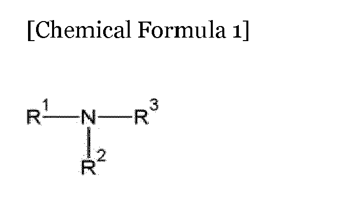

In the above Chemical Formula 1, R¹ to R³ are independently a substituted or unsubstituted C₂ to C₅ alkyl group.

## Description

A rechargeable lithium battery is disclosed.

A lithium polymer battery may be manufactured to have various shapes and specifically, a thin film and accordingly, applied to a small IT device such as a smart phone, a tablet PC, a net book, and the like.

As these IT devices gradually require higher and higher performance, the battery used therein is requiring high-capacity. As the rechargeable lithium battery is required of high capacity, graphite as a negative electrode material may not so much sufficiently realize high-capacity as required for the rechargeable lithium battery.

Accordingly, a silicon-based active material has drawn attention as a negative electrode material due to higher charge and discharge capacity than the graphite. However, the silicon-based active material has a problem of sharp cycle-life deterioration, since an electrolyte solution is exhausted due to the reaction of silicon in the negative electrode with the electrolyte solution.

The present invention therefore provides a rechargeable lithium battery having improved cycle-life characteristics at room temperature and at high temperature during high voltage charge.

A first aspect of the invention provides a rechargeable lithium battery comprising a negative electrode which comprises a negative active material; a positive electrode which comprises a positive active material; a separator between the negative electrode and the positive electrode; and an electrolyte solution comprising a lithium salt, an organic solvent and an additive, wherein the negative active material includes a Si-based material; and the additive comprises fluoroethylene carbonate and a compound represented by Chemical Formula 1. 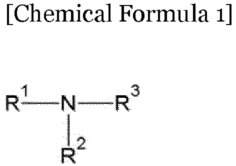 wherein R¹ to R³ are independently a substituted or unsubstituted C2 to C5 alkyl group.

In one embodiment, R¹, R² and R³ may be the same. For example, R¹, R² and R³ may be n-butyl.

The compound represented by the above Chemical Formula 1 may be included in an amount of less than or equal to about 10 parts by weight based on 100 parts by weight of the organic solvent. In particular, the compound represented by the above Chemical Formula 1 may be included in an amount of about 0.1 to about 10 parts by weight based on 100 parts by weight of the organic solvent.

The fluoroethylene carbonate may be included in an amount of less than or equal to about 10 parts by weight based on 100 parts by weight of the organic solvent. In particular, the fluoroethylene carbonate may be included in an amount of about 1 to 10 parts by weight based on 100 parts by weight of the organic solvent.

The additive may further comprise LiB(C₂O₄)F₂ (lithium difluorooxalatoborate, LiFOB). LiB(C₂O₄)F₂ may be included in an amount of less than or equal to about 5 parts by weight based on 100 parts by weight of the organic solvent. In particular, LiB(C₂O₄)F₂ may be included in an amount of about 0.1 to about 5 parts by weight based on 100 parts by weight of the organic solvent.

The Si-based material may be included in an amount of less than or equal to about 70 wt% based on the total amount of negative electrode. In particular, the Si-based material may be included in an amount of about 1 to about 70 wt% based on the total amount of the negative electrode.

The Si-based material may include Si, SiOₓ (0<x≤2), a Si-M alloy wherein M is an element selected from an alkali metal, an alkaline-earth metal, a Group 13 to 16 element other than Si, a transition metal, a rare earth element, and a combination thereof; a SiC composite; or a combination thereof.

The separator may comprise a substrate and a coating layer comprising a polymer layer disposed on at least one side of the substrate.

The polymer may comprise polyvinylidene fluoride (PVdF), a polyvinylidene fluoride-hexafluoropropylene (PVdF-HFP) copolymer, or a combination thereof.

The coating layer may further include an inorganic material. In particular, the inorganic material may include Al₂O₃, MgO, TiO₂, Al(OH)₃, Mg(OH)₂, Ti(OH)₄, or a combination thereof.

The rechargeable lithium battery may be may be configured to be charged to a voltage of about 4.0 to about 4.45 V.

A more complete appreciation of the present invention, and many of the attendant advantages thereof, will be readily apparent as the same becomes better understood by reference to the following detailed description when considered in conjunction with the accompanying drawings wherein:
FIG. 1 is a schematic view showing a rechargeable lithium battery according to an embodiment of the present invention.
FIG. 2 is a graph showing a cyclic voltammetry analysis of a rechargeable lithium battery cell according to Example 1. The graph x-axis is voltage (V). The graph y-axis is current I (A/cm²).
FIG. 3 is a graph showing cyclic voltammetry analysis of a rechargeable lithium battery cell according to Comparative Example 1. The graph x-axis is voltage (V). The graph y-axis is current I (A/cm²).
FIG. 4 is a graph showing high temperature cycle-life characteristics of the rechargeable lithium battery cells according to Examples 1 and 2 and Comparative Example 1. The graph x-axis is "Cycle No.". The graph y-axis is capacity retention (%).
FIG. 5 is a graph showing high temperature cycle-life characteristics of the rechargeable lithium battery cells according to Examples 1 and 3 and Comparative Examples 1 and 2. The graph x-axis is "Cycle No.". The graph y-axis is capacity retention (%).

As used herein, when a definition is not otherwise provided, the term 'substituted' may refer to substituted with a substituent selected from a halogen (F, Br, Cl or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

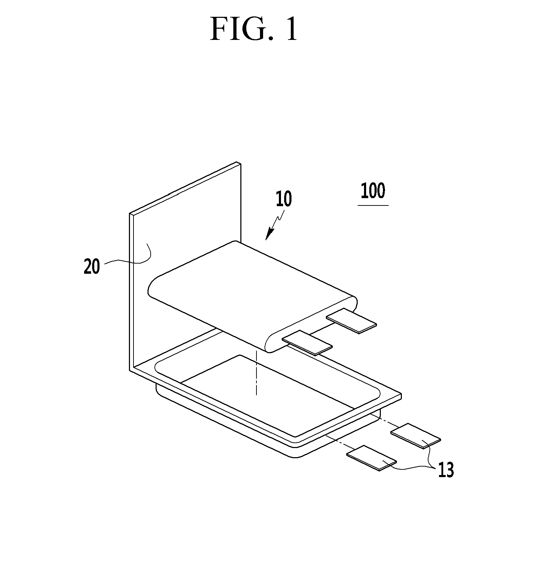

Referring to FIG. 1, a rechargeable lithium battery 100 according to one embodiment includes an electrode assembly 10, a battery case 20 housing the electrode assembly 10, and an electrode tab 13 playing a role of an electrical channel for externally inducing a current formed in the electrode assembly 10. Both sides of the battery case 20 are overlapped and sealed. In addition, an electrolyte solution is injected into the battery case 20 housing the electrode assembly 10.

The electrode assembly 10 includes a positive electrode, a negative electrode facing the positive electrode and a separator between the negative electrode and the positive electrode, wherein the electrolyte solution is impregnated in the positive electrode, the negative electrode and the separator.

The electrolyte solution includes a lithium salt, an organic solvent, and an additive. The additive includes fluoroethylene carbonate and a compound represented by Chemical Formula 1.

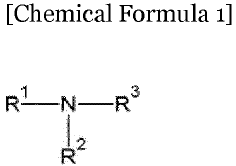

In the above Chemical Formula 1, R¹ to R³ may be independently a substituted or unsubstituted C2 to C5 alkyl group.

The compound represented by the above Chemical Formula 1 binds with HF in the electrolyte solution and thereby a reaction of the electrolyte solution with the negative active material, and specifically the Si-based material may be suppressed, and thus battery performance is improved.

Specifically, a lithium salt of the electrolyte solution may have a reaction with the Si-based material of the negative electrode on the surface of the Si-based material as follows. The lithium salt is illustrated by using LiPF₆ as an example, and the Si-based material is illustrated by using SiO₂ as an example, but kinds of the lithium salt and the Si-based material are respectively limited thereto.
1) LiPF₆ (Li⁺ + PF₆⁻) → LiF + PF₅
2) PF₅ + H₂O → PF₃O + 2HF
3) HF + Li + e⁻ → LiF + 1/2H₂
4) HF + Li₂CO₃ → 2LiF + H₂CO₃
5) SiO₂ + 4HF → SiF₄ + H₂O
6) SiO₂ + 6HF → H₂SiF₆

The electrolyte solution reacts with the Si-based material of the negative electrode through this mechanism and may deteriorate battery performance. According to one embodiment, a compound represented by the above Chemical Formula 1 is bonded with HF in the electrolyte solution and thus, suppresses a reaction of the HF with the Si-based material as shown in the reactions 5) and 6) and thus, may improve cycle-life characteristics at room temperature and a high temperature.

In the above Chemical Formula 1, when the alkyl group has about 2 to about 5 carbons, the compound may be more easily bonded with the HF and more suppress a reaction of the electrolyte solution with the Si-based material.

The compound represented by the above Chemical Formula 1 may be included in an amount of less than or equal to about 10 parts by weight, such as about 0.1 to about 10 parts by weight, specifically about 0.1 to about 3 parts by weight, and more specifically about 0.2 to about 3 parts by weight based on 100 parts by weight of the organic solvent. When the compound represented by the above Chemical Formula 1 is included within this range, the compound may be more easily bonded with the HF and may better suppress a reaction of the electrolyte solution with the Si-based material of the negative electrode.

The fluoroethylene carbonate is earlier decomposed than carbonate such as ethylene carbonate used as an organic solvent and may form a stable SEI film on the surface of the negative electrode and thus, improve performance of a rechargeable lithium battery.

The fluoroethylene carbonate may be included in an amount of less than or equal to about 10 parts by weight, such as about 1 to about 10 parts by weight, and specifically about 5 to about 7 parts by weight based on 100 parts by weight of the organic solvent. When the fluoroethylene carbonate is included within the range, cycle-life characteristics of a rechargeable lithium battery may be improved at room temperature and at high temperature without capacity deterioration.

The additive may further include LiB(C₂O₄)F₂ (lithium difluorooxalatoborate, LiFOB). The LiB(C₂O₄)F₂ has small resistance against the Si-based material of the negative electrode and may more improve cycle-life characteristics at room temperature and at high temperature.

The LiB(C₂O₄)F₂ may be included in an amount of less than or equal to about 5 parts by weight, such as about 0.1 to about 5 parts by weight, and specifically about 1 to about 3 parts by weight based on 100 parts by weight of the organic solvent. When the LiB(C₂O₄)F₂ is included within this range, cycle-life characteristics at room temperature and at high temperature may be improved without capacity deterioration.

The additive may further include vinylethylene carbonate, propane sultone, succinonitrile, adiponitrile, or a combination thereof besides the above additive. The organic solvent serves as a medium for transmitting ions taking part in the electrochemical reaction of a battery. The organic solvent may be selected from a carbonate-based, ester-based, ether-based, ketone-based, alcohol-based, or aprotic solvent.

The carbonate-based solvent may include, for example, dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like.

When the linear carbonate compounds and cyclic carbonate compounds are mixed, an organic solvent having high dielectric constant and low viscosity can be provided. The cyclic carbonate and the linear carbonate are mixed together in a volume ratio ranging from about 1:1 to about 1:9.

The ester-based solvent may include, for example methylacetate, ethylacetate, n-propylacetate, dimethylacetate, methylpropionate, ethylpropionate, γ-butyrolactone, decanolide, valerolactone, mevalonolactone, caprolactone, or the like. The ether solvent may include, for example dibutylether, tetraglyme, diglyme, dimethoxyethane, 2-methyltetrahydrofuran, tetrahydrofuran, and the like, and the ketone-based solvent may include cyclohexanone, and the like. The alcohol-based solvent may include, for example ethyl alcohol, isopropyl alcohol, and the like.

The organic solvent may be used singularly or in a mixture. When the organic solvent is used in a mixture, the mixture ratio may be controlled in accordance with a desirable battery performance.

The lithium salt is dissolved in an organic solvent, supplies lithium ions in a battery, basically operates the rechargeable lithium battery, and improves lithium ion transportation between positive and negative electrodes therein.

The lithium salt may include LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, LiB(C₂O₄)₂ (lithiumbisoxalatoborate (LiBOB)) or a combination thereof.

The lithium salt may be used in a concentration ranging from about 0.1 M to about 2.0 M. When the lithium salt is included within the above concentration range, an electrolyte may have improved performance and lithium ion mobility due to optimal electrolyte conductivity and viscosity.

The negative electrode may comprise a negative current collector and a negative active material layer disposed thereon.

The negative current collector may be a copper foil, a nickel foil, a stainless steel foil, a titanium foil, a nickel foam, a copper foam, a polymer substrate coated with a conductive metal, or a combination thereof, but is not limited thereto.

The negative active material layer may include a negative active material, a binder, and optionally a conductive material.

The negative active material comprises a Si-based material. The above electrolyte solution additive suppresses a reaction between the Si-based material and the electrolyte solution and thus battery performance may be improved.

The Si-based material may include Si, SiOₓ (0<x≤2), a Si-M alloy (where M is an element selected from an alkali metal, an alkaline-earth metal, a Group 13 to 16 element other than Si, a transition metal, a rare earth element, and a combination thereof;a Si-C composite; or a combination thereof. The Y may be specifically selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po and combinations thereof.

The Si-based material may be included in an amount of less than or equal to about 70 wt%, such as about 1 to about 70 wt%, and specifically about 7 to about 20 wt% based on total amount of the negative electrode, and specifically the negative active material layer. When the Si-based material is included within the above range, the above electrolyte solution additive need not be used in a large amount, and thus high-capacity and cycle-life characteristics of a battery may be improved.

The negative active material may further include a carbon-based material, a lithium metal alloy, a transition metal oxide, or a combination thereof, besides the Si-based material.

The carbon-based material may include crystalline carbon, amorphous carbon, or a combination thereof. The crystalline carbon may include graphite, and examples of the graphite may include non-shaped, sheet-shaped, flake-shaped, a spherical shape or fiber-shaped natural graphite or artificial graphite. The amorphous carbon may include soft carbon or hard carbon, a mesophase pitch carbonized product, fired coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The transition metal oxide may be vanadium oxide, lithium vanadium oxide, and the like.

The binder improves binding properties of negative active material particles with one another and with a current collector, and examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change. Examples thereof may be a carbon-based material such as natural graphite, artificial graphite, carbon black, acetylene black, ketjen black, a carbon fiber and the like; a metal-based material such as a metal powder or a metal fiber and the like of copper, nickel, aluminum, silver, and the like; a conductive polymer such as a polyphenylene derivative and the like; or a mixture thereof.

The positive electrode may include a positive current collector and a positive active material layer formed on the positive current collector. The positive active material layer includes a positive active material, a binder, and optionally a conductive material. The positive current collector may be Al (aluminum), but is not limited thereto.

The positive active material may be a compound being capable of intercalating and deintercallating lithium. Specifically, at least one composite oxide of lithium and a metal of cobalt, manganese, nickel, or a combination thereof may be used, and specific examples thereof may be a compound represented by one of the following chemical formulae:
LiₐA_{1-b}B_{b}D₂ (wherein, in the above chemical formula, 0.90 ≤ a ≤ 1.8 and 0 ≤ b ≤ 0.5);
LiₐE₁₋bB_{b}O_{2-c}D_{c} (wherein, in the above chemical formula, 0.90 ≤ a ≤ 1.8, 0 ≤ b ≤ 0.5, 0 ≤ c ≤ 0.05); LiE_{2-b}B_{b}O_{4-c}D_{c} (wherein, in the above chemical formula, 0 ≤ b ≤ 0.5, 0 ≤ c ≤ 0.05); LiₐNi_{1-b-c}Co_{b}B_{c}D_{α} (wherein, in the above chemical formula, 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Co_{b}B_{c}O_{2-α}F₂ (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein, in the above chemical formula, 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (wherein, in the above chemical formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the above chemical formula, 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (wherein, in the above chemical formula, 0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (wherein, in the above chemical formula, 0.90 ≤ a ≤ 1.8, 0.001 ≤ b ≤ 0.1); LiₐCoG_{b}O₂ (wherein, in the above chemical formula, 0.90 ≤ a ≤ 1.8, 0.001 ≤ b ≤ 0.1); LiₐMnG_{b}O₂ (wherein, in the above chemical formula, 0.90 ≤ a ≤ 1.8, 0.001 ≤ b ≤ 0.1); LiₐMn₂G_{b}O₄ (wherein, in the above chemical formula, 0.90 ≤ a ≤ 1.8, 0.001 ≤ b ≤ 0.1); LiQS₂; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The positive active material may be more specifically, lithium cobalt oxide, lithium nickel cobalt manganese oxide, lithium nickel cobalt aluminum oxide, or a combination thereof.

The binder improves binding properties of positive active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change. Examples thereof may be one or more of natural graphite, artificial graphite, carbon black, acetylene black, ketjen black, a carbon fiber, copper, a metal powder, a metal fiber or the like of nickel, aluminum, silver, and the like, or a conductive material such as a polyphenylene derivative and the like.

The negative electrode and the positive electrode may be manufactured by a method including mixing an active material, a conductive material, and a binder into an active material composition and coating the composition on a current collector. The electrode manufacturing method is well known, and thus is not described in detail in the present specification. The solvent includes N-methylpyrrolidone and the like, but is not limited thereto.

The separator may include any materials commonly used in the conventional lithium battery as long as separating the negative electrode from the positive electrode and providing a transporting passage for lithium ion. In other words, the separator may have a low resistance to ion transportation and an excellent impregnation for an electrolyte solution. For example, it may be selected from a glass fiber, polyester, polyethylene, polypropylene, polytetrafluoroethylene (PTFE), or a combination thereof. It may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator including a ceramic component or a polymer material may be used. Selectively, it may have a mono-layered or multi-layered structure.

The separator may specifically include a substrate and at least one coating layer positioned on one side of the substrate.

The substrate may include a polyolefin resin. The polyolefin resin may include a polyethylene-based resin, a polypropylene-based resin, or a combination thereof. The coating layer may include a polymer. The polymer may include polyvinylidene fluoride (PVdF), a polyvinylidene fluoride-hexafluoropropylene (PVdF-HFP) copolymer, or a combination thereof. When the polymer is coated on at least one side of the substrate, the polymer is physically cross-linked with binders that are respectively present in the positive and negative electrodes, which further improves adherence between the separator and the electrodes.

The coating layer may further include an inorganic material. The inorganic material may include Al₂O₃, MgO, TiO₂, Al(OH)₃, Mg(OH)₂, Ti(OH)₄ or a combination thereof. When the inorganic material is coated on at least one side of the substrate of a separator, the substrate may be structurally prevented from directly contacting active material layers that are respectively present in the positive and negative electrodes, and thus battery safety may be improved. The inorganic material may have an average particle diameter of about 50 to about 500 µm.

The coating layer may further include a heat-resistance resin including an aramid resin, a polyamideimide resin, a polyimide resin, or a combination thereof.

The coating layer may have a thickness of about 1 to about 10 µm, and specifically about 1 to about 8 µm. When the coating layer has a thickness within the range, the coating layer may accomplish excellent heat resistance and suppress thermal shrinkage and elution of metal ions.

When substrate a separator has the coating layer on at least one side of a substrate, a plenty of HF may be generated in an electrolyte solution during the thermal compression. However, since the HF is suppressed from a reaction with the Si-based material by a compound represented by the above Chemical Formula 1, a high voltage rechargeable lithium battery including the separator may secure excellent cycle-life characteristics of at room temperature and a high temperature.

The rechargeable lithium battery according to one embodiment may be configured to be charged at a high voltage of about 4.0 to about 4.45 V. Even though the rechargeable lithium battery is charged within the high voltage range, excellent cycle-life characteristics at room temperature and at high temperature may be secured.

The following examples illustrate the present invention in more detail.

### Example 1

### (Manufacture of Positive Electrode)

A positive active material layer composition was prepared by mixing a mixture of 80 wt% of LiCoO₂ and 20 wt% of LiNi_{0.5}Co_{0.2}Mn_{0.3}O₂, polyvinylidene fluoride (PVdF), and carbon black in a weight ratio of 92:4:4 and dispersing the obtained mixture in N-methyl-2-pyrrolidone. The positive active material layer composition was coated on a 20 µm-thick aluminum foil, dried, and compressed, manufacturing a positive electrode.

### (Manufacture of Negative Electrode)

A negative active material layer composition was prepared by mixing a mixture of 90 wt% of graphite and Si-Fe alloy (a mole ratio of Si:Fe=4:6) (CV4, 3M) and polyvinylidene fluoride (PVdF) in a weight ratio of 92:8 and dispersing the resulting mixture in N-methyl-2-pyrrolidone. The negative active material layer composition was coated on a 15 µm-thick copper foil, dried, and compressed, manufacturing a negative electrode.

### (Preparation of Electrolyte Solution)

An electrolyte solution was prepared by mixing ethylene carbonate (EC), ethylmethyl carbonate (EMC), and diethyl carbonate (DEC) in a volume ratio of 3:5:2 to prepare a mixed solvent, dissolving 1.3 M LiPF₆ in the mixed solvent, and adding 10 parts by weight of fluoroethylene carbonate and 0.2 parts by weight of a compound represented by the following Chemical Formula 2 based on 100 parts by weight of the mixed solvent to the solution.

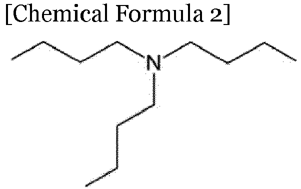

### (Manufacture of Rechargeable Lithium Battery Cell)

The positive electrode and the negative electrode along with an 18 µm-thick polyethylene separator were spirally wound, manufacturing an electrode assembly. Subsequently, the electrode assembly was put in a battery case, and the electrolyte solution was inserted into the battery case, manufacturing a rechargeable lithium battery cell.

### Example 2

A rechargeable lithium battery cell was manufactured according to the same method as Example 1 except for preparing the electrolyte solution by adding 3 parts by weight of LiB(C₂O₄)F₂ based on 100 parts by weight of the mixed solvent.

### Example 3

A rechargeable lithium battery cell was manufactured according to the same method as Example 1 except for using a separator manufactured as follows.

The separator was manufactured by coating a coating material prepared by mixing 2 parts by weight of Al₂O₃ having an average particle diameter of 200 µm based on 100 parts by weight of a substrate and 5 parts by weight of polyvinylidene fluoride (PVdF) on one surface of the polyethylene substrate.

### Comparative Example 1

A rechargeable lithium battery cell was manufactured according to the same method as Example 1 except for adding no compound represented by the above Chemical Formula 2.

### Comparative Example 2

A rechargeable lithium battery cell was manufactured according to the same method as Comparative Example 1 except for using a separator manufactured as follows.

The separator was manufactured by coating a coating material prepared by mixing 2 parts by weight of Al₂O₃ having an average particle diameter of 200 µm and 5 parts by weight of polyvinylidene fluoride (PVdF) based on 100 parts by weight of a substrate on one surface of the polyethylene substrate.

### Evaluation 1: Irreversible Characteristic of Negative Electrode

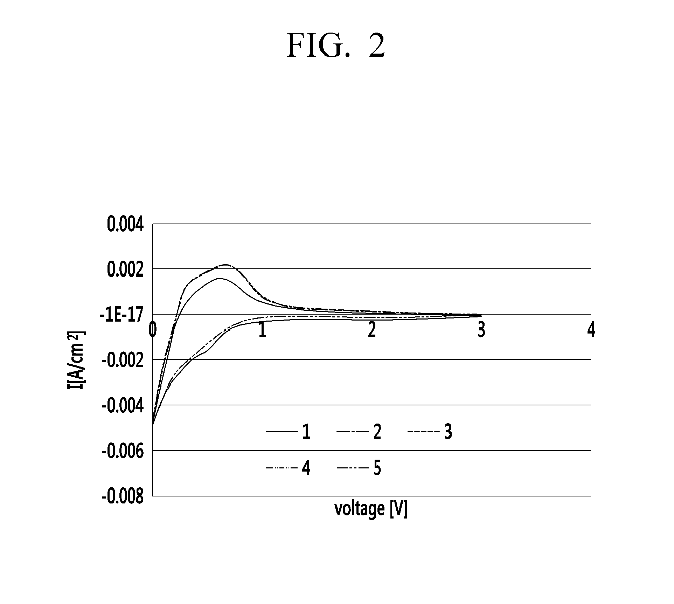

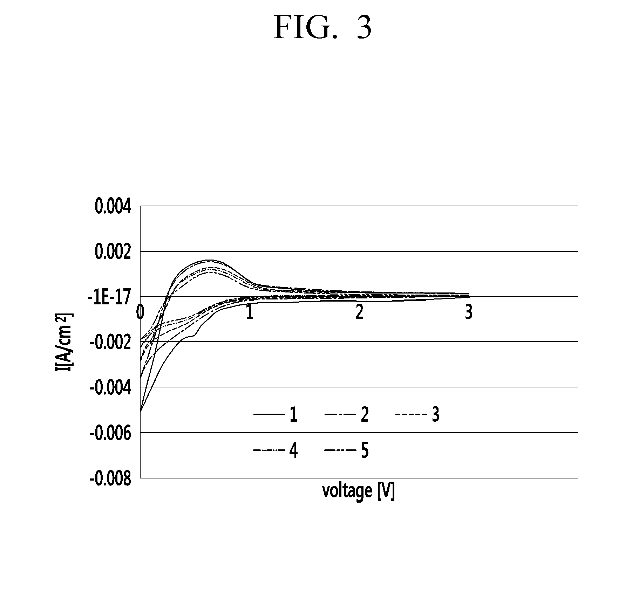

Irreversible characteristics of the negative electrodes of Example 1 and Comparative Example 1 were evaluated by using a negative electrode as a working electrode and a lithium metal as a reference electrode and a counter electrode and performing a cyclic voltammetry analysis from 0V to 3V at a speed of 1 mV/s, and the results are provided in FIGS. 2 and 3.

FIG. 2 is the cyclic voltammetry analysis graph of the rechargeable lithium battery cell according to Example 1, and FIG. 3 is the cyclic voltammetry analysis graph of the rechargeable lithium battery cell according to Comparative Example 1. In FIGS. 2 and 3, figures of 1 to 5 correspond to cycle numbers. Also, each cycle has (-) and (+) current values, as the each cycle is perfomed according to the voltage condition of 3V → 0V → 3V.

Referring to FIGS. 2 and 3, FIG. 3 shows that a current peak in an area ranging from about oV to 1V decreases as a cycle goes, and FIG. 2 shows that that the current peak disappears away as a cycle goes. The reason is that the rechargeable lithium battery cell of Example 1 in FIG. 2 tended to suppress undesirable and irreversible reactions compared to that of Comparative Example 1 in FIG. 3.

### Evaluation 2: Cycle-Life Characteristics of Rechargeable Lithium Battery Cell

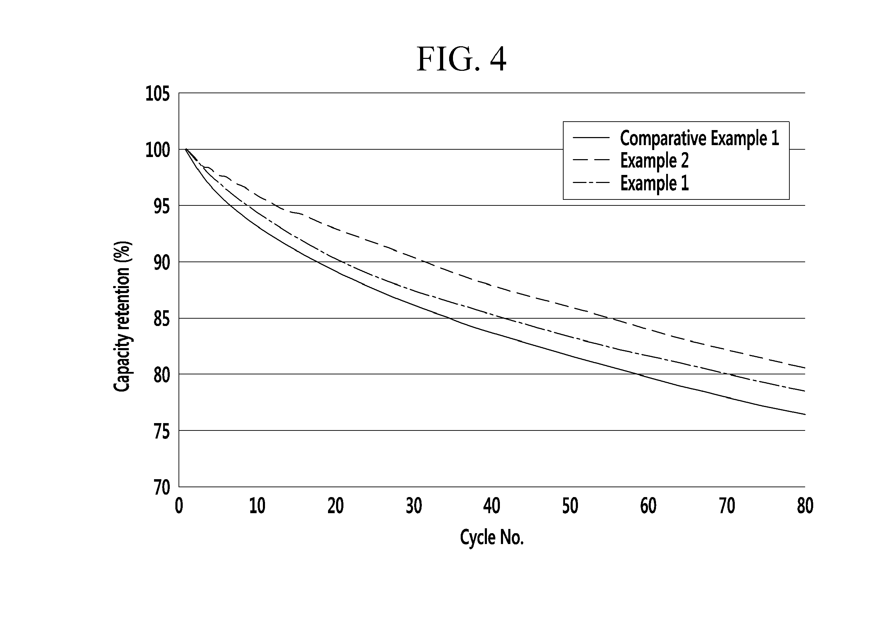

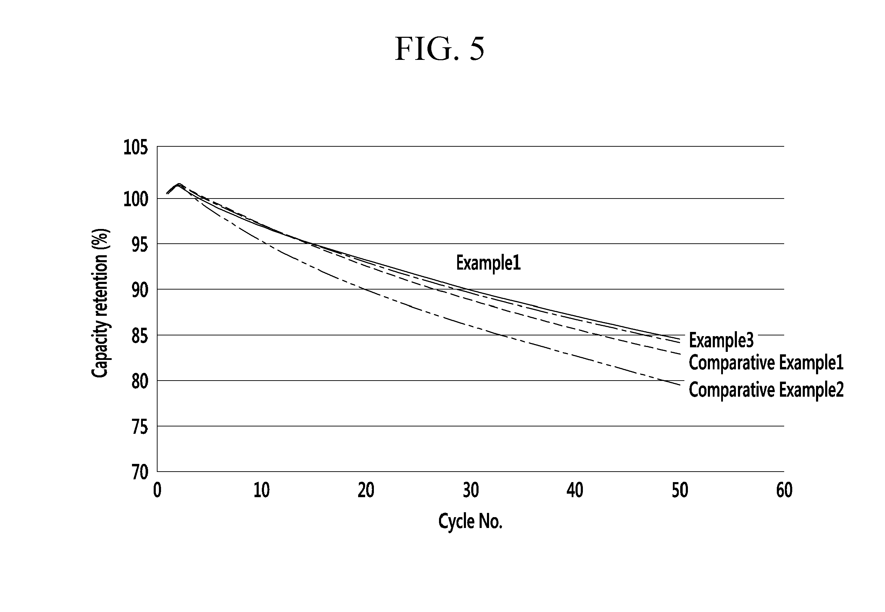

The rechargeable lithium battery cells according to Examples 1 to 3 and Comparative Examples 1 and 2 were charged at 4.4V and 0.7C at 45°C and then, discharged at 2.75V and 0.5C, and discharge capacity of the rechargeable lithium battery cells depending on a cycle was evaluated after 150 times repeating this charge and discharge. The results are provided in FIGS. 4 and 5.

FIG. 4 is a graph showing high temperature cycle-life characteristics of the rechargeable lithium battery cells according to Examples 1 and 2 and Comparative Example 1, and FIG. 5 is a graph showing high temperature cycle-life characteristics of the rechargeable lithium battery cells according to Examples 1 and 3 and Comparative Examples 1 and 2. Herein, FIG. 4 shows the rechargeable lithium battery cells had a coin shape (capacity of about 6 mAh), and FIG. 5 shows the rechargeable lithium battery cells had a pouch shape (capacity of about 2,000 mAh).

Referring to FIG. 4, Examples 1 and 2 using an electrolyte solution including fluoroethylene carbonate and a compound represented by Chemical Formula 1 showed better cycle-life characteristics at a high temperature than Comparative Example 1 using an electrolyte solution including no compound represented by the above Chemical Formula 1. In addition, comparing Example 1 with 2, the electrolyte solution including fluoroethylene carbonate and a compound represented by Chemical Formula 1 more improved high temperature cycle-life characteristics than the electrolyte solution including LiFOB.

Referring to FIG. 5, comparing Example 3 using a separator having a coating layer on at least one side of a substrate with Comparative Example 2, Example 3 using an electrolyte solution including fluoroethylene carbonate and a compound represented by Chemical Formula 1 showed better cycle-life characteristics at a high temperature than Comparative Example 2 using an electrolyte solution including no compound represented by the above Chemical Formula 1.

### Evaluation 3: EDX Analysis of Negative Electrode

The rechargeable lithium battery cells according to Example 1 and Comparative Example 1 were charged at 4.4V and 0.7C at 45°C and then, discharged at 2.75V and 0.5C and then, decomposed after 100r times repeating the charge and discharge. The Si amount of the negative electrodes was analyzed, and the results are provided in the following Table 1.

**(Table 1)**

| | Example 1 | Comparative Example 1 |
|---|---|---|
| C (atom%) | 63.21 | 67.86 |
| O (atom%) | 16.63 | 16.57 |
| F (atom%) | 13.41 | 11.60 |
| Si (atom%) | 4.21 | 1.54 |

Referring to the Table 1, Example 1 showed the greater amount of Si than Comparative Example 1, since a Si-based material of a negative electrode is suppressed from a reaction with HF in an electrolyte solution.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A rechargeable lithium battery, comprising
a negative electrode comprising a negative active material;
a positive electrode comprising a positive active material;
a separator between the negative electrode and the positive electrode; and an electrolyte solution comprising a lithium salt, an organic solvent and an additive;
wherein the negative active material comprises a Si-based material; and the additive comprises fluoroethylene carbonate and a compound represented by Chemical Formula 1: 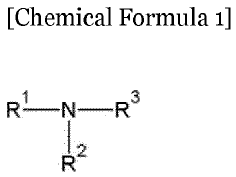 wherein R¹ to R³ are independently a substituted or unsubstituted C2 to C5 alkyl group.

2. The rechargeable lithium battery of claim 1, wherein R¹ to R³ are the same.

3. The rechargeable lithium battery of claim 2, wherein R¹ to R³ are n-butyl.

4. The rechargeable lithium battery of any of the preceding claims, wherein the compound represented by Chemical Formula 1 is included in an amount less than or equal to about 10 parts by weight based on 100 parts by weight of the organic solvent.

5. The rechargeable lithium battery of claim 4, wherein the compound represented by Chemical Formula 1 is included in an amount from about 0.1 to about 3 parts by weight based on 100 parts by weight of the organic solvent.

6. The rechargeable lithium battery of any of the preceding claims, wherein the fluoroethylene carbonate is included in an amount less than or equal to about 10 parts by weight based on 100 parts by weight of the organic solvent.

7. The rechargeable lithium battery of any of the preceding claims, wherein the additive further comprises LiB(C₂O₄)F₂ (lithium difluorooxalatoborate, LiFOB).

8. The rechargeable lithium battery of claim 7, wherein the LiB(C₂O₄)F₂ is included in an amount of less than or equal to about 5 parts by weight based on 100 parts by weight of the organic solvent.

9. The rechargeable lithium battery of any of the preceding claims, wherein the Si-based material is included in an amount from about 1 to about 70 wt% based on total amount of negative electrode.

10. The rechargeable lithium battery of any of the preceding claims, wherein the Si-based material comprises Si; SiOₓ (0<x≤2); a Si-M alloy wherein M is an element selected from an alkali metal, an alkaline-earth metal, a Group 13 to 16 element other than Si, a transition metal, a rare earth element, and a combination thereof; a Si-C composite; or a combination thereof.

11. The rechargeable lithium battery of any of the preceding claims, wherein
the separator comprises
a substrate, and
a coating layer comprising a polymer disposed on at least one side of the substrate.

12. The rechargeable lithium battery of claim 11, wherein the polymer comprises polyvinylidene fluoride (PVdF), a polyvinylidene fluoride-hexafluoropropylene (PVdF-HFP) copolymer, or a combination thereof.

13. The rechargeable lithium battery of claim 11 or claim 12, wherein the coating layer further comprises an inorganic material.

14. The rechargeable lithium battery of claim 13, wherein the inorganic material comprises Al₂O₃, MgO, TiO₂, Al(OH)₃, Mg(OH)₂, Ti(OH)₄, or a combination thereof.

15. The rechargeable lithium battery of any of the preceding claims, wherein the rechargeable lithium battery is configured to be charged to a voltage of from about 4.0 to about 4.45 V.
